(19) Europäisches Patentamt
European Patent Office
Office européen des brevets

(11) **EP 3 928 080 B1**

(12) **EUROPÄISCHE PATENTSCHRIFT**

(45) Veröffentlichungstag und Bekanntmachung des Hinweises auf die Patenterteilung:
**30.07.2025 Patentblatt 2025/31**

(21) Anmeldenummer: **20707055.8**

(22) Anmeldetag: **21.02.2020**

(51) Internationale Patentklassifikation (IPC):
**G01N 21/552** *(2014.01)* **G01N 21/27** *(2006.01)*
**G01J 3/28** *(2006.01)* **G01N 21/21** *(2006.01)*
**G01J 3/02** *(2006.01)* **G01J 3/42** *(2006.01)*

(52) Gemeinsame Patentklassifikation (CPC):
**G01N 21/552; G01J 3/0224; G01J 3/28; G01J 3/42; G01N 21/274;** G01N 21/21

(86) Internationale Anmeldenummer:
**PCT/EP2020/054668**

(87) Internationale Veröffentlichungsnummer:
**WO 2020/169827 (27.08.2020 Gazette 2020/35)**

(54) **VERFAHREN SOWIE EINE VORRICHTUNG ZUR BESTIMMUNG OPTISCHER EIGENSCHAFTEN EINES PROBENMATERIALS**

METHOD AND APPARATUS FOR DETERMINING OPTICAL PROPERTIES OF A SAMPLE MATERIAL

PROCÉDÉ AINSI QUE DISPOSITIF POUR DÉTERMINER LES PROPRIÉTÉS OPTIQUES D'UN ÉCHANTILLON DE MATÉRIAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.02.2019 DE 102019104556**

(43) Veröffentlichungstag der Anmeldung:
**29.12.2021 Patentblatt 2021/52**

(73) Patentinhaber: **Technische Universität Wien 1040 Wien (AT)**

(72) Erfinder:
• **LENDL, Bernhard 1160 Wien (AT)**
• **SCHMAUSS, Bernhard 92637 Theisseil (DE)**
• **BÄR, Matthias 91052 Erlangen (DE)**

(74) Vertreter: **SONN Patentanwälte GmbH & Co KG Riemergasse 14 1010 Wien (AT)**

(56) Entgegenhaltungen:
**EP-A1- 3 399 299 EP-A1- 3 399 299
WO-A1-02/01203 WO-A1-02/01203
DE-A1- 10 145 719 DE-A1- 10 145 719
US-A- 3 902 807**

## Beschreibung

Die Erfindung betrifft ein Verfahren sowie eine Vorrichtung zur Bestimmung optischer Eigenschaften eines Probenmaterials.

Optische Eigenschaften eines Probenmaterials werden häufig mittels spektroskopischer Messverfahren, wie der Spektroskopie auf Basis der abgeschwächten und/oder frustrierten oder verhinderten Totalreflexion (*engl.* attenuated total reflection, ATR oder *engl.* frustrated total internal reflection, FTIR) bestimmt. Der Vorteil derartiger Spektroskopieverfahren, wie z.B. in US 3,902,807 offenbart, liegt insbesondere darin, dass trotz einer starken Grundabsorption des Probenmaterials ein Absorptionsspektrum aufgenommen werden kann. Hierbei ist es bekannt, dass die Dämpfung der Lichtwelle an der Oberfläche zwischen einem ATR-Element und dem Probenmaterial für unterschiedliche Polarisationen der einfallenden Lichtwelle unterschiedlich stark ausfällt sowie dass die unterschiedlichen Polarisationen auch einen unterschiedlichen Phasenversatz aufweisen.

So ist beispielsweise aus der US 7,920,264 B1 ein HATR-Verfahren (*engl.* horizontal attenuated total reflecion, HATR) bekannt, welches den Phasenversatz für zwei unterschiedliche Polarisationsrichtungen zur Messung der Drehung der Polarisationsebene durch das Probenmaterial, also zur Polarimetrie, nutzt.

Weiters zeigen EP 3399299 A1 und DE10145719A1 Wasserstoffsensoren. Außerdem zeigt WO 2002001203 A1 eine refraktorische Messmethode.

Als Lichtquellen für derartige Spektroskopieverfahren werden häufig thermische Strahler, die zur Wellenlängenselektion mit einem Monochromator gefiltert werden, verwendet. Thermische Strahler haben jedoch den Nachteil, dass diese eine geringe spektrale Leistungsdichte aufweisen und daher eine geringe Intensität bei schmalbandiger Filterung. Alternativ werden bei den oben genannten Spektroskopieverfahren auch Laserquellen wie zum Beispiel Quantenkaskadenlaser verwendet. Diese stellen zwar sehr leistungsstarke Lichtquellen insbesondere im mittleren und fernen infraroten Wellenlängenbereich dar, weisen jedoch im Vergleich zu thermischen Strahlern ein hohes Intensitätsrauschen auf, so dass insbesondere bei Probenmaterial mit geringen Konzentrationen des zu untersuchenden Stoffes die Empfindlichkeit reduziert wird und diese daher nicht mehr gemessen werden können. Auch ist die Leistungsdichte dieser Lichtquellen über die Wellenlänge nicht konstant, so dass das gemessene Spektrum mit einer Referenzmessung, insbesondere ohne oder mit bekannten Probenmaterial, verglichen werden muss. Hierbei ist es möglich, die Referenzmessung direkt durch einen zusätzlichen optischen Pfad simultan zu erfassen und vom Messsignal zu subtrahieren (*engl.* balanced detection). Nachteilig an einem solchen zusätzlichen Referenzpfad ist, dass dieser ebenfalls eine wellenabhängige Transmission besitzen könnte und zudem anderen Fluktuationen als der Messpfad unterliegt. Auch sollte der Referenzpfad bevorzugt eine ähnliche Dämpfung wie der Messpfad aufweisen.

Der Erfindung liegt nun die Aufgabenstellung zugrunde, ein Verfahren sowie eine Vorrichtung zur Bestimmung optischer Eigenschaften eines Probenmaterials bereitzustellen, welche die Nachteile des Standes der Technik vermeidet. Insbesondere liegt der Erfindung auch die Aufgabenstellung zugrunde ein verbessertes Verfahren sowie eine verbesserte Vorrichtung zur Bestimmung optischer Eigenschaften eines Probenmaterials bereitzustellen, welche vorteilhafterweise die Auswirkungen des Intensitätsrauschens von Lichtquellen verringert bzw. unterdrückt und/oder eliminiert.

Diese Aufgabe wird durch ein Verfahren, das ein ATR-Infrarotspektroskopieverfahren ist, zur Bestimmung optischer Eigenschaften eines flüssigen Probenmaterials gelöst, welches folgende Schritte umfasst: Einstrahlen von Licht aus dem infraroten Wellenlängenbereich auf das Probenmaterial durch ein Reflexionselement derart, dass das Licht an der Grenzfläche gebildet aus dem Probenmaterial und dem Reflexionselement total reflektiert wird, wobei das Reflexionselement ein ATR-Element ist; und weiter: a) Bestimmen einer ersten Intensität des an der Grenzfläche reflektierten Lichts eines ersten Polarisationszustands; b) Bestimmen einer zweiten Intensität des an der Grenzfläche reflektierten Lichts eines zweiten Polarisationszustands; c) Verhältnisbildung der ersten Intensität und der zweiten Intensität oder umgekehrt; wobei der erste Polarisationszustand parallel polarisiertes Licht und der zweite Polarisationszustand senkrecht polarisiertes Licht ist.

Diese Aufgabe wird weiter gelöst durch eine Vorrichtung, die ein ATR-Infrarotspektrometer ist, zur Bestimmung optischer Eigenschaften eines flüssigen Probenmaterials umfassend: ein Reflexionselement, wobei das Reflexionselement ein ATR-Element ist, und eine Fixierungseinheit, die eingerichtet ist zum Fixieren des Probenmaterials derart, dass das Probenmaterial direkt an dem Reflexionselement angeordnet ist; - eine Lichtquelle, die eingerichtet ist zum Einstrahlen von Licht aus dem infraroten Wellenlängenbereich auf das Probenmaterial durch das Reflexionselement derart, dass das Licht an der Grenzfläche gebildet aus dem Probenmaterial und dem Reflexionselement total reflektiert wird; - zumindest eine Detektoreinrichtung, die eingerichtet ist zur Bestimmung einer ersten Intensität von von dem Probenmaterial reflektiertem Licht eines ersten Polarisationszustands und zur Bestimmung einer zweiten Intensität des von dem Probenmaterial reflektierten Lichts eines zweiten Polarisationszustands, wobei der erste Polarisationszustand parallel polarisiertes Licht und der zweite Polarisationszustand senkrecht polarisiertes Licht ist; - zumindest eine Recheneinheit, die eingerichtet ist zur Verhältnisbildung der ersten Intensität und der zweiten Intensität oder umgekehrt.

Insbesondere wird mittels der Vorrichtung das erfindungsgemäße Verfahren, bevorzugt nach einem der Ansprüche 1 bis 9 durchgeführt. So ist es möglich, wenn die Vorrichtung zur Durchführung eines Verfahrens nach einem der Ansprüche 1 bis 9, dient.

Der Erfindung liegt dabei die Erkenntnis zugrunde, dass durch das Bestimmen einer ersten Intensität des von dem Probenmaterial reflektierten Lichts eines ersten Polarisationszustands, durch das Bestimmen einer zweiten Intensität des von dem Probenmaterial reflektierten Lichts eines zweiten Polarisationszustands und durch die anschließende Verhältnisbildung der ersten Intensität und der zweiten Intensität oder umgekehrt die Auswirkungen des Intensitätsrauschens von Lichtquellen auf das Messergebnis verringert bzw. unterdrückt und/oder eliminiert werden. Die Erfindung nutzt dabei die Polarisationsabhängigkeit des von dem Probenmaterial reflektierten, insbesondere des an der Grenzfläche gebildet aus dem Probenmaterial und einem Reflexionselement reflektierten Lichts, aus, wobei insbesondere die unterschiedlichen Polarisationen des reflektierten Lichts unterschiedlich starke relative Änderungen der Reflexion aufweisen. Hierbei hat sich überraschenderweise ergeben, dass daher trotz der Verhältnisbildung der Intensitäten des reflektierten Lichts der beiden Polarisationszustände ein Signal bestehen bleibt, wobei gleichzeitig insbesondere das Intensitätsrauschen der verwendeten Lichtquelle nicht in das endgültige Signal eingeht. Hierdurch entfällt die Notwendigkeit eines Referenzpfades. Auch gehen Fluktuationen, welche durch den Messaufbau selbst bedingt sind, nicht in das Signal ein, insbesondere solange diese sich in gleicher Weise auf beide Polarisationszustände auswirken.

Unter "Polarisationszustand", "Polarisationsart", "Polarisationsrichtung", "Polarisationsgrad" und/oder "Polarisation" wird hierbei bevorzugt die Schwingungsrichtung von Licht verstanden. Insbesondere im Wellenmodell ist Licht vorzugsweise eine senkrecht zur ihrer Ausbreitungsrichtung schwingende Welle, insbesondere also eine Transversalwelle, so dass hier unter diesen Begriffen bevorzugt die Schwingungsrichtung einer Transversalwelle verstanden wird. Bevorzugt bezieht sich die Schwingungsrichtung auf den Feldvektor des elektrischen Feldes, insbesondere wobei der Feldvektor des magnetischen Feldes entsprechend senkrecht dazu schwingt. Insbesondere wenn sich die Schwingungsrichtung schnell und ungeordnet ändert, handelt es sich vorzugsweise um unpolarisiertes Licht. Die Begriffe "Polarisationszustand", "Polarisationsart", "Polarisationsrichtung", "Polarisationsgrad" und/oder "Polarisation" geben daher insbesondere den geordneten Anteil an.

Weiter ist es vorgesehen, dass das Verfahren ein ATR-Infrarotspektroskopieverfahren, bevorzugt ein HATR-Infrarotspektroskopieverfahren, ein FEWS-Infrarotspektroskopieverfahren (*engl.* fibre evanescent wave spectroscopy, FEWS) und/oder ein FTIR-Infrarotspektroskopieverfahren, ist. Ebenso ist es vorgesehen, dass die Vorrichtung ein ATR-Infrarotspektrometer, bevorzugt ein HATR-Infrarotspektrometer, ein FEWS-Infrarotspektrometer und/oder ein FTIR-Infrarotspektrometer, ist.

Das Probenmaterial ist flüssig. So ist es möglich, dass das Probenmaterial beispielsweise Wasser und/oder Bakterien umfasst. Ferner ist es denkbar, dass das Probenmaterial einen oder mehrere Stoffe ausgewählt aus der Gruppe: Wasser, Bakterien, Viren, Lösungsmittel, Lösungsmittelmischungen, Körperflüssigkeiten, insbesondere Blut, umfasst.

Weitere vorteilhafte Ausgestaltungen der Erfindung sind in den Unteransprüchen bezeichnet.

Vorzugsweise umfasst das Verfahren weiter folgenden Schritt, insbesondere welcher vor den Schritten a) und b) durchgeführt wird: - Aufteilen des von dem Probenmaterial reflektierten Lichts in den ersten Polarisationszustand und den zweiten Polarisationszustand, bevorzugt mittels zumindest eines Polarisators, weiter bevorzugt mittels eines ersten Polarisators und eines zweiten Polarisators.

Auch ist es von Vorteil, wenn die Vorrichtung weiter zumindest einen Polarisator aufweist, insbesondere zum Aufteilen des von dem Probenmaterial reflektierten Lichts in den ersten Polarisationszustand und den zweiten Polarisationszustand, insbesondere dass die Vorrichtung einen ersten Polarisator zum Aufteilen des von dem Probenmaterial reflektierten Lichts in den ersten Polarisationszustand und einen zweiten Polarisator zum Aufteilen des von dem Probenmaterial reflektierten Lichts in den zweiten Polarisationszustand aufweist.

Unter "Polarisator(en)" werden bevorzugt Bauteile verstanden, welche elektromagnetische Wellen, insbesondere Licht, wie beispielsweise Licht aus dem infraroten Wellenlängenbereich, einer bestimmten Polarisation aus nicht, teilweise oder anders polarisierten elektromagnetischen Wellen herausfiltern. Hierbei ist es möglich, dass Polarisatoren dabei insbesondere Mechanismen ausgewählt aus der Gruppe: Dichroismus, Reflexion, Doppelbrechung, Streuung und/oder Beugung, nutzen, um die unterschiedlichen Polarisationen der einfallenden Wellen zu trennen. Beispielsweise werden insbesondere Polarisatoren, die eine linear polarisierte elektromagnetische Welle abtrennen, Linearpolarisatoren, oder auch lineare Polarisatoren, genannt. Ferner werden beispielsweise Polarisatoren, die zirkular polarisiertes Licht abtrennen, als Zirkularpolarisatoren bezeichnet.

Vorteilhafterweise ist der zumindest eine Polarisator, insbesondere der erste Polarisator und der zweite Polarisator, ausgewählt aus der Gruppe: Polarisator basierend auf Doppelbrechung, bevorzugt Polarisationsprisma, weiter bevorzugt Nicolsches Prisma, Rochon-Prisma, Glan-Thomson-Prisma, Polarisator basierend auf Dichroismus, bevorzugt J-Folie und/oder H-Folie, und/oder Polarisator basierend auf Reflexion, bevorzugt Brewster-Fenster.

Vorzugsweise ist der zumindest eine Polarisator, insbesondere der erste Polarisator und der zweite Polarisator, ein Brewster-Fenster. Hierdurch ist es möglich, den ersten und den zweiten Polarisationszustand des von dem Probenmaterial reflektierten Lichts zu trennen, insbesondere wobei sichergestellt ist, dass weitere Polarisationszustände das Messergebnis nicht störend beeinflussen.

Der erste Polarisationszustand ist parallel polarisiertes Licht und der zweite Polarisationszustand senkrecht polarisiertes Licht oder umgekehrt. Hierdurch ist es möglich, ein maximal mögliches Signal, bevorzugt für das Verhältnis der ersten Intensität und der zweiten Intensität zu erhalten, insbesondere wobei sich diese Polarisationszustände ferner auch gut mittels oben genannter Polarisatoren trennen lassen.

Auch ist es möglich, dass in den Schritten a) und/oder b) die Intensität des von dem Probenmaterial reflektierten Lichts des ersten und/oder des zweiten Polarisationszustand mittels zumindest einer Detektoreinrichtung bestimmt wird, insbesondere dass in den Schritten a) und/oder b) die Intensität des von dem Probenmaterial reflektierten Lichts des ersten Polarisationszustands mittels einer ersten Detektoreinrichtung und die Intensität des von dem Probenmaterial reflektierten Lichts des zweiten Polarisationszustand mittels einer zweiten Detektoreinrichtung bestimmt wird.

So ist es auch möglich, dass die Vorrichtung eine erste Detektoreinrichtung zur Bestimmung der ersten Intensität des von dem Probenmaterial reflektierten Lichts des ersten Polarisationszustands und eine zweite Detektoreinrichtung zur Bestimmung der zweiten Intensität des von dem Probenmaterial reflektierten Lichts des zweiten Polarisationszustands aufweist.

Bevorzugt ist hierbei die zumindest eine Detektoreinrichtung, insbesondere die erste und/oder die zweite Detektoreinrichtung, ein Photodetektor ausgewählt aus der Gruppe: Photozelle, Photomultiplier, Mikrokanalplatten-Photomultiplier, CMOS-Sensor, CCD-Sensor, Photodiode, Phototransistor, Photowiderstand, und/oder thermischer Strahlungsmesser, insbesondere Bolometer, pyroelektrischer Sensor, Pyrometer, Thermoelement und/oder Golay-Zelle. Insbesondere bei geringem zu detektierendem Licht und hoher zeitlicher Auflösungen kommen bevorzugt Photomultiplier oder Photodioden, wie beispielsweise eine HgCdTe-Photodiode, zum Einsatz.

Ferner ist es möglich, dass die zumindest eine Detektoreinrichtung, insbesondere dass die erste und/oder die zweite Detektoreinrichtung, ein Synchrondetektor (lock-in) ist. Hierdurch ist es möglich, die Rauschunterdrückung weiter zu verbessern bzw. das Rauschen weiter filtern.

Es ist zweckmäßig, dass das Verfahren weiter folgenden Schritt aufweist, insbesondere welcher vor den Schritten a) und b) durchgeführt wird: - Einstrahlen von Licht auf das Probenmaterial durch ein Reflexionselement derart, dass das Licht an der Grenzfläche gebildet aus dem Probenmaterial und dem Reflexionselement reflektiert wird, insbesondere total reflektiert wird.

Vorzugsweise handelt es sich bei dem von dem Probenmaterial reflektiertem Licht, insbesondere des ersten und/oder des zweiten Polarisationszustands, um das Licht, welches an der Grenzfläche gebildet aus dem Probenmaterial und dem Reflexionselement reflektiert wird, insbesondere total reflektiert wird. So ist es von Vorteil, wenn das an der Grenzfläche gebildet aus dem Probenmaterial und dem Reflexionselement reflektierte Licht das von dem Probenmaterial reflektierte Licht, insbesondere des ersten und/oder des zweiten Polarisationszustands, ist. So ist es vorteilhaft, wenn das von dem Probenmaterial reflektierte Licht dem an der Grenzfläche gebildet aus dem Probenmaterial und dem Reflexionselement reflektierten Licht entspricht bzw. mit diesem identisch ist.

Bevorzugt wird hierbei das Licht derart auf das Probenmaterial durch das Reflexionselement eingestrahlt, dass sich eine elektromagnetische Welle an der Oberfläche des Reflexionselements ausbildet, welche in das Probenmaterial eindringt, insbesondere wobei die Feldstärke der elektromagnetischen Welle exponentiell abnimmt. Bevorzugt handelt es sich bei der elektromagnetischen Welle an der Oberfläche des Reflexionselements, insbesondere deren Feldstärke exponentiell abnimmt, um eine sog. abklingende (evaneszente) Welle, welche vorzugsweise bei Totalreflexion an der Grenzfläche gebildet aus dem Probenmaterial und dem Reflexionselement entsteht.

So ist es möglich, dass, insbesondere innerhalb des Reflexionselements, der Winkel ($\alpha$), unter welchem das Licht auf das Probenmaterial eingestrahlt wird, gleich dem Winkel ($\beta$) ist, unter welchem das Licht von dem Probenmaterial reflektiert wird.

Hierbei ist es möglich, dass, insbesondere innerhalb des Reflexionselements, der Winkel ($\alpha$), unter welchem das Licht auf das Probenmaterial eingestrahlt wird, und der Winkel ($\beta$), unter welchem das Licht von dem Probenmaterial reflektiert wird, zwischen 0° und 90°, bevorzugt zwischen 10° und 85°, beträgt.

Auch ist es von Vorteil, wenn der Brechungsindex des Reflexionselements ($n_1$) größer ist als der Brechungsindex des Probenmaterials ($n_2$).

So ist es möglich, dass der Brechungsindex des Reflexionselements ($n_1$) zwischen 2,0 und 4,0, bevorzugt zwischen 2,4 und 2,6, beträgt und/oder dass der Brechungsindex des Probenmaterials ($n_2$) zwischen 1,05 und 1,95, bevorzugt zwischen 1,25 und 1,75, beträgt.

Ferner ist es zweckmäßig, wenn der Winkel ($\alpha$) größer oder gleich dem Winkel ist, für welchen Totalreflexion an der Grenzfläche gebildet aus dem Probenmaterial und dem Reflexionselement, insbesondere für das auf das Probenmaterial eingestrahlte Licht, auftritt.

Insbesondere wird der Grenzwinkel ($\Theta_c$), ab welchem Totalreflexion auftritt, wie folgt berechnet:

$$\Theta_c = \mathrm{arscin}\ (n_2/n_1).$$

Der Grenzwinkel ($\Theta_c$) wird hierbei insbesondere auch als kritischer Winkel bezeichnet. Ab dem kritischen Winkel ($\Theta_c$) kann bevorzugt die elektromagnetische Welle, insbesondere das eingestrahlte Licht, nicht mehr (bzw. nicht mehr überwiegend) in das optisch dünnere Medium, insbesondere das Probenmaterial eindringen, und wird stattdessen an der Grenzfläche zwischen dem optisch dichteren und dem optisch dünneren Medium, insbesondere an der Grenzfläche gebildet aus dem Probenmaterial und dem Reflexionselement, (insbesondere nahezu vollständig) reflektiert, insbesondere total reflektiert. Insbesondere ist hierbei der Ausfallswinkel gleich dem Einfallswinkel.

So ist es möglich, dass das auf das Probenmaterial eingestrahlte Licht, insbesondere aufgrund des Winkels ($\alpha$), unter welchem das Licht auf das Probenmaterial eingestrahlt wird, in dem Probenmaterial nicht ausbreitungsfähig ist.

Vorteilhafterweise ist das Reflexionselement ein Lichtwellenleiter, insbesondere ein Lichtwellenleiter, in welchem Licht aufgrund von Totalreflexion geführt wird. Beispielsweise ist ein derartiger Lichtwellenleiter ein Prisma oder eine Faser, insbesondere ohne Mantel.

Erfindungsgemäß ist das Reflexionselement ein ATR-Element, insbesondere ein ATR-Kristall.

So ist es möglich, dass das Reflexionselement, bevorzugt der ATR-Kristall, Zinkselenid (ZnSe), Germanium (Ge), Thalliumbromidiodid (KRS-5), Silicium (Si), AMTIR (amorphous material transmitting infrared radiation), insbesondere AMTIR-1 (GeAsSe), und/oder Diamant umfasst. Derartige Materialien eignen sich bevorzugt für Licht aus dem infraroten Wellenlängenbereich.

Ferner ist es auch denkbar, dass insbesondere bei FEWS-Infrarotspektroskopieverfahren und/oder in einem FEWS-Infrarotspektrometer das ATR-Element Chalkogenidglas-Fasern umfasst.

Ferner ist es zweckmäßig, wenn das auf das Probenmaterial eingestrahlte Licht unpolarisiertes Licht ist, bevorzugt wenn das auf das Probenmaterial eingestrahlte Licht eine Polarisation unter 45° zur Einfallsebene aufweist. Hierdurch wird insbesondere eine gleichmäßige Anregung in senkrechter und paralleler Polarisation erreicht.

Das auf das Probenmaterial eingestrahlte Licht ist Licht aus dem infraroten Wellenlängenbereich, bevorzugt aus dem nahen und/oder dem mittleren und/oder dem fernen Infrarotbereich, weiter bevorzugt Licht aus dem Wellenlängenbereich zwischen 0,8 $\mu$m und 1000 $\mu$m, noch weiter bevorzugt Licht aus dem Wellenlängenbereich zwischen 2,5 $\mu$m und 25 $\mu$m, ferner noch weiter bevorzugt Licht aus dem Wellenlängenbereich zwischen 8 $\mu$m und 12 $\mu$m.

Zweckmäßigerweise wird das auf das Probenmaterial eingestrahlte Licht von einer Lichtquelle abgestrahlt, insbesondere wobei die Lichtquelle ausgewählt ist aus der Gruppe: Laser, bevorzugt Halbleiterlaser, weiter bevorzugt Quantenkaskadenlaser (QCL), und/oder thermische Strahler, bevorzugt Glühlampe, Nernstlampe, Widerstands-Heizelemente aus Siliziumcarbid oder Kohlenbogenlampe. Hierbei ist es auch möglich, andere Lichtquellen zu verwenden. Insbesondere unterliegt das Verfahren und/oder die Vorrichtung zur Bestimmung optischer Eigenschaften eines Probenmaterials keiner Einschränkung bezüglich der verwendeten Lichtquellen.

Weiter ist es auch zweckmäßig, dass die Vorrichtung weiter eine der folgenden Einheiten umfasst: - eine Lichtquelle, insbesondere zum Einstrahlen von Licht auf das Probenmaterial durch ein Reflexionselement derart, dass das Licht an einer Grenzfläche gebildet aus dem Probenmaterial und dem Reflexionselement reflektiert wird, insbesondere total reflektiert wird; - ein Reflexionselement, bevorzugt ein ATR-Element, weiter bevorzugt ein ATR-Kristall, insbesondere wobei das Probenmaterial eine Grenzfläche mit dem Reflexionselement ausbildet; - eine Fixierungseinheit zum Fixieren des Probenmaterials auf dem Reflexionselement; optional:

- einen oder mehrere Lichtwellenleiter, bevorzugt ein oder mehrere Fasern, weiter bevorzugt ein oder mehrere Glasfasern, insbesondere zum bereichsweise Führen des auf das Probenmaterial eingestrahlten Lichts und/oder des von dem Probenmaterial reflektierten Lichts; - ein oder mehrere Spiegel, insbesondere zum Umlenken des Lichts; - zumindest einen optischen Sumpf; - einen oder mehrere Wellenlängenselektoren, bevorzugt einen oder mehrere Monochromatoren, insbesondere zur spektralen Isolierung einer vorbestimmten Wellenlänge, vorzugsweise des auf das Probenmaterial eingestrahlten Lichts.

Auch ist es möglich, wenn das auf das Probenmaterial eingestrahlte Licht und/oder das von dem Probenmaterial reflektierte Licht, insbesondere des ersten und/oder des zweiten Polarisationszustands, ein Lichtstrahl ist, bevorzugt wobei der Lichtstrahl zumindest bereichsweise einen Strahldurchmesser zwischen 10 $\mu$m und 10000 $\mu$m aufweist.

Weiter ist es auch möglich, dass das auf das Probenmaterial eingestrahlte Licht und/oder das von dem Probenmaterial reflektierte Licht, insbesondere des ersten und/oder des zweiten Polarisationszustands, zumindest bereichsweise in einem Lichtwellenleiter, bevorzugt in einer Faser, noch weiter bevorzugt in einer Glasfaser, geführt wird.

Es ist von Vorteil, wenn in dem Schritt c) aufgrund der Verhältnisbildung der ersten Intensität und der zweiten Intensität oder umgekehrt die Auswirkungen des Intensitätsrauschens der Lichtquelle, insbesondere auf das Messergebnis, verringert werden, bevorzugt eliminiert werden.

So ist es möglich, dass die Auswirkungen des Intensitätsrauschens der Lichtquelle, insbesondere auf das Messergebnis, mindestens um den Faktor 2,5, bevorzugt um den Faktor 5, weiter bevorzugt um den Faktor 10, noch weiter bevorzugt um den Faktor 50, ferner noch weiter bevorzugt um den Faktor 100, verringert werden.

Erfindungsgemäß werden zumindest die Schritte a) bis c) für Licht aus dem infraroten Wellenlängenbereich, bevorzugt aus dem nahen und/oder dem mittleren und/oder dem fernen Infrarotbereich, weiter bevorzugt für Licht aus dem Wellenlängenbereich zwischen 0,8 $\mu$m und 1000 $\mu$m, noch weiter bevorzugt für Licht aus dem Wellenlängenbereich zwischen 2,5 $\mu$m und 25 $\mu$m, ferner noch weiter bevorzugt für Licht aus dem Wellenlängenbereich zwischen 8 $\mu$m und 12 $\mu$m, durchgeführt.

Ferner ist es bevorzugt, dass die Lichtpfade in Schritt a) und b), insbesondere für das von dem Probenmaterial reflektierte Licht des ersten und des zweiten Polarisationszustands, im Wesentlichen identisch sind. So ist es auch möglich, dass die Lichtpfade in Schritt a) und b), insbesondere für das von dem Probenmaterial reflektierte Licht des ersten und des zweiten Polarisationszustands, identisch sind. Hierdurch wird es insbesondere erreicht, dass sich Fluktuationen auf beide Messpfade gleichermaßen auswirken. Weiter ist es möglich, dass sich die Lichtpfade in Schritt a) und b) um weniger als 10 mm, bevorzugt um weniger als 1 mm, unterscheiden. Insbesondere entstehen derartige geringe Unterschiede in den Lichtpfaden aufgrund des Messaufbaus mit einer ersten und einer zweiten Detektoreinrichtung, so dass insbesondere am Ende der Messstrecke geringe Unterschiede in den Lichtpfaden entstehen können.

Vorzugsweise erfolgen die Schritte a) und b) simultan, insbesondere werden die Intensität des von dem Probenmaterial reflektierten Lichts des ersten und des zweiten Polarisationszustands simultan bestimmt. Hierdurch wird es insbesondere ermöglicht, dass die Notwendigkeit einer zusätzlichen Referenzmessung entfällt. Weiter wird hierdurch insbesondere ein exaktes Messergebnis erzielt, da mögliche Unterschiede zwischen den Signalen, welche aufgrund von zeitlich versetzten Messungen entstehen können, eliminiert werden.

Vorzugsweise umfasst das Verfahren weiters den Schritt:

d) Bestimmung zumindest einer optischen Eigenschaft des Probenmaterials auf Grundlage des gebildeten Verhältnisses.

Die Recheneinheit ist bevorzugt eingerichtet zur Verhältnisbildung der ersten Intensität und der zweiten Intensität oder umgekehrt.

In einer bevorzugten Variante werden einer oder mehrere der oben angeführten Schritte, insbesondere zumindest die Schritte a), b), c) und vorzugsweise d), für eine Vielzahl von Wellenlängen für Licht aus dem infraroten Wellenlängenbereich, bevorzugt aus dem nahen und/oder dem mittleren und/oder dem fernen Infrarotbereich, weiter bevorzugt für Licht aus dem Wellenlängenbereich zwischen 0,8 $\mu$m und 1000 $\mu$m, noch weiter bevorzugt für Licht aus dem Wellenlängenbereich zwischen 2,5 $\mu$m und 25 $\mu$m, ferner noch weiter bevorzugt für Licht aus dem Wellenlängenbereich zwischen 8 $\mu$m und 12 $\mu$m, durchgeführt bzw. wiederholt. Es ist auch möglich, dass in Schritt d) nach Wiederholung der Schritte a) bis c) für die Vielzahl von Wellenlängen die Bestimmung zumindest einer optischen Eigenschaft des Probenmaterials auf Grundlage der (Vielzahl an) gebildeten Verhältnissen für die Vielzahl an Verhältnissen erfolgt.

Ferner ist es möglich, dass oben beschriebene Verfahren, insbesondere nach einem der Ansprüche 1 bis 12, und/oder die oben beschriebene Vorrichtung, insbesondere nach einem der Ansprüche 13 bis 15, für die Spektralanalyse, insbesondere des Probenmaterials, anzuwenden. Bevorzugt basiert die Spektralanalyse, insbesondere des Probenmaterials, auf der Totalreflexion, vorzugsweise der frustrierten Totalreflexion.

So ist es auch möglich, dass das oben beschriebene Verfahren, insbesondere nach einem der Ansprüche 1 bis 12, und/oder die oben beschriebene Vorrichtung, insbesondere nach einem der Ansprüche 13 bis 15, zur bzw. für die Unterdrückung des Intensitätsrauschens von Lichtquellen, insbesondere bei der Spektralanalyse, verwendet wird.

Im Folgenden werden Ausführungsbeispiele der Erfindung exemplarisch unter Zuhilfenahme der beiliegenden, nicht maßstabgetreuen Figuren 2 bis 7 erläutert.

Fig. 1            zeigt schematisch einen bekannten Messaufbau in Draufsicht

Fig. 2a und Fig. 2b     zeigen schematisch eine Vorrichtung in Seitenansicht und in Draufsicht

Fig. 3a           zeigt schematisch einen vergrößerten Ausschnitt der Fig. 2a

Fig. 3b           zeigt schematisch einen vergrößerten Ausschnitt der Fig. 3a

Fig. 4a bis Fig. 4c     zeigen Diagramme

Fig. 5a bis Fig. 5c     zeigen schematisch Vorrichtungen in Seitenansicht und in Draufsicht

Fig. 6 und Fig. 7      zeigen schematisch Verfahrensschritte zur Bestimmung optischer Eigenschaften eines Probenmaterials

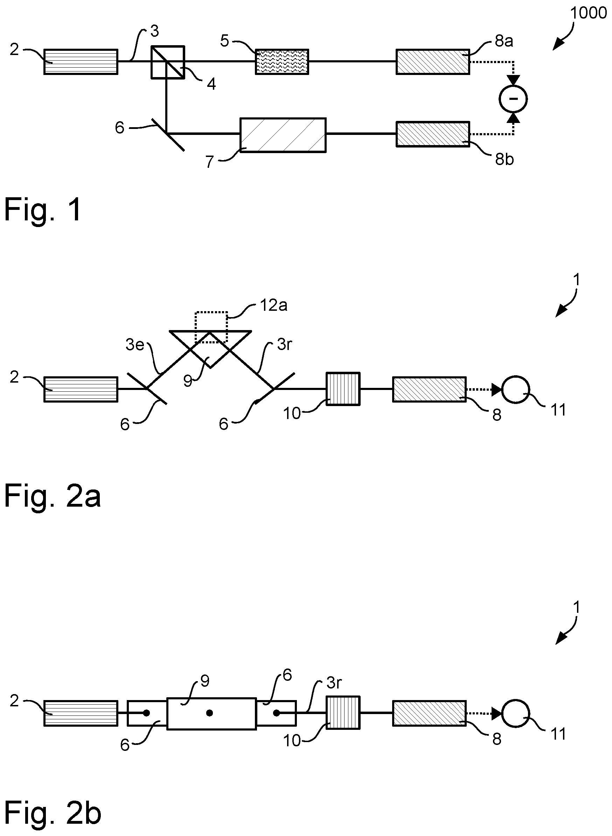

Fig. 1 zeigt schematisch einen aus dem Stand der Technik bekannten Messaufbau 1000 in Draufsicht. Bevorzugt werden mittels des Messaufbaus 1000 die optischen Eigenschaften eines Probenmaterials 5 bestimmt.

Wie in Fig. 1 gezeigt, umfasst der Messaufbau 1000 eine Lichtquelle 2, einen Strahlenteiler 4, das Probenmaterial 5, einen Spiegel 6, ein variables Dämpfungsglied 7 und zwei Detektoren 8a und 8b.

Als Lichtquelle 2 werden insbesondere thermische Strahler, die zur Wellenlängenselektion mit einem Monochromator gefiltert werden, verwendet. Thermische Strahler haben jedoch insbesondere den Nachteil, dass diese eine geringe spektrale Leistungsdichte aufweisen und daher eine geringe Intensität bei schmalbandiger Filterung. Alternativ werden als Lichtquelle 2 auch Laserquellen wie zum Beispiel Quantenkaskadenlaser verwendet. Diese stellen zwar insbesondere sehr leistungsstarke Lichtquellen im mittleren und fernen infraroten Wellenlängenbereich dar, weisen jedoch im Vergleich zu thermischen Strahlern ein hohes Intensitätsrauschen auf, so dass insbesondere bei Probenmaterial 5 mit geringen Konzentrationen des zu untersuchenden Stoffes die Empfindlichkeit reduziert wird und diese daher nicht mehr gemessen werden können. Auch ist die Leistungsdichte derartiger Lichtquellen 2 über die Wellenlänge nicht konstant, so dass das gemessene Spektrum vorteilhafterweise mit einer Referenzmessung, insbesondere ohne oder mit bekannten Probenmaterial 5, verglichen werden soll.

Hierzu wird bevorzugt, wie in Fig. 1 gezeigt, gemäß dem Stand der Technik ein zusätzlicher optischer Pfad in den Messaufbau integriert, so dass die Referenzmessung direkt durch den zusätzlichen optischen Pfad simultan erfasst werden kann und vom Messsignal subtrahiert werden kann (*engl.* balanced detection). Dazu wird, wie in Fig. 1 gezeigt, insbesondere das Licht 3 mit Hilfe des Strahlenteilers 4 aufgespalten und in den Referenzpfad und den Messpfad geleitet. Um eine möglichst identische Dämpfung im Messpfad und im Referenzpfad zu erhalten umfasst der Referenzpfad im Stand der Technik vorzugsweise ein variables Dämpfungsglied 7. Anschließend werden vorteilhafterweise das Messsignal und das Referenzsignal in den Detektoren 8a und 8b, bei welchen es sich beispielsweise um Photomultiplier handelt detektiert, und voneinander subtrahiert. Nachteilig an einem solchen zusätzlichem Referenzpfad ist jedoch, dass dieser ebenfalls eine wellenabhängige Transmission besitzen könnte und zudem anderen Fluktuationen wie der Messpfad unterliegt. Auch sollte der Referenzpfad bevorzugt eine ähnliche Dämpfung wie der Messpfad aufweisen, was jedoch meist insbesondere nur grob mittels des variablen Dämpfungsglieds 7 erreicht werden kann, da das Probenmaterial 5 unbekannt ist.

Im Folgenden werden bevorzugte Ausführungsbeispiele der Erfindung exemplarisch unter Zuhilfenahme der beiliegenden, nicht maßstabgetreuen Figuren 2 bis 7 erläutert, insbesondere welche die Nachteile des Standes der Technik vermeiden und welche vorteilhafterweise die Auswirkungen des Intensitätsrauschen von Lichtquellen verringern bzw. unterdrücken und/oder eliminieren.

Fig. 2a und Fig. 2b zeigen schematisch eine Vorrichtung 1 in Seitenansicht und Draufsicht.

Wie in Fig. 2a und in Fig. 2b gezeigt, umfasst die Vorrichtung 1 eine Lichtquelle 2, Spiegel 6, ein Reflexionselement 9, zumindest einen Polarisator 10 und zumindest eine Detektoreinrichtung 8 sowie eine Recheneinheit 11.

Die in den Fig. 2a und Fig. 2b gezeigte Vorrichtung 1, bevorzugt ein Spektrometer, weiter bevorzugt ein ATR-Infrarotspektrometer, zur Bestimmung optischer Eigenschaften des Probenmaterials 5 umfasst hierbei: - zumindest eine Detektoreinrichtung 8 zur Bestimmung einer ersten Intensität von von dem Probenmaterial 5 reflektiertem Licht 3r eines ersten Polarisationszustands und zur Bestimmung einer zweiten Intensität des von dem Probenmaterial 5 reflektierten Lichts 3r eines zweiten Polarisationszustands; - zumindest eine Recheneinheit 11 zur Verhältnisbildung der ersten Intensität und der zweiten Intensität oder umgekehrt.

Bevorzugt ist die Lichtquelle 2 ausgewählt aus der Gruppe: Laser, bevorzugt Halbleiterlaser, weiter bevorzugt Quantenkaskadenlaser (QCL), und/oder thermische Strahler, bevorzugt Glühlampe, Nernstlampe, Heizelement aus Siliziumcarbid oder Kohlenbogenlampe. Vorzugsweise emittiert die Lichtquelle Licht aus dem infraroten Wellenlängenbereich, bevorzugt aus dem nahen und/oder dem mittleren und/oder dem fernen Infrarotbereich, weiter bevorzugt Licht aus dem Wellenlängenbereich zwischen 0,8 $\mu$m und 1000 $\mu$m, noch weiter bevorzugt Licht aus dem Wellenlängenbereich zwischen 2,5 $\mu$m und 25 $\mu$m, ferner noch weiter bevorzugt Licht aus dem Wellenlängenbereich zwischen 8 $\mu$m und 12 $\mu$m.

Bei der in den Fig. 2a und Fig. 2b gezeigten Lichtquelle 2 handelt es sich beispielsweise um einen Quantenkaskadenlaser, der Licht aus dem Wellenlängenbereich zwischen 8 $\mu$m und 12 $\mu$m emittiert.

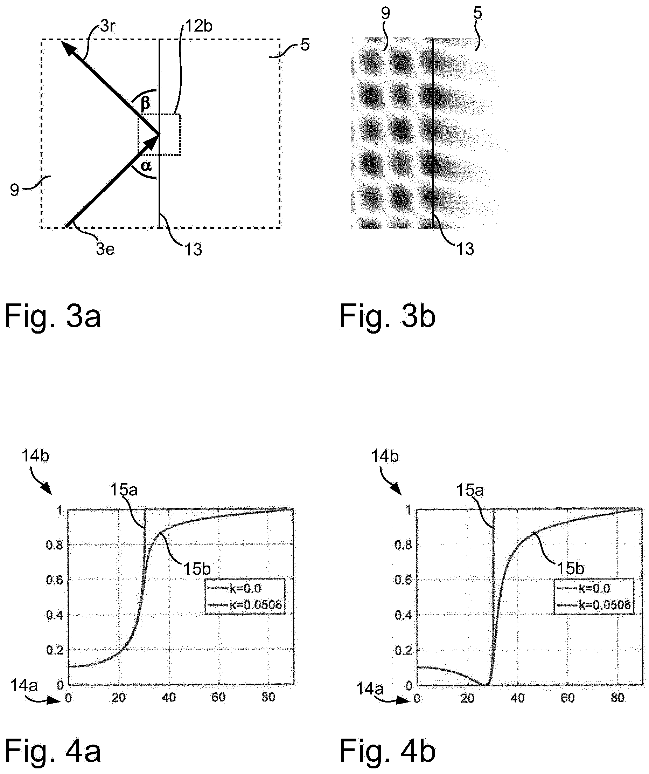

Wie in den Fig. 2a und Fig. 2b gezeigt, wird insbesondere das von der Lichtquelle 2 emittierte Licht auf ein Probenmaterial, welches auf dem Reflexionselement 9 angeordnet ist, eingestrahlt. Der besseren Übersichtlichkeit halber ist hier das Probenmaterial nicht dargestellt. Zur Einstrahlung auf das Probenmaterial wird das von der Lichtquelle 2 emittierte Licht insbesondere mit Hilfe des Spiegels 6 umgelenkt. Weiter wird hierbei das auf das Probenmaterial durch das Reflexionselement 9 eingestrahlte Licht 3e bevorzugt derart eingestrahlt, dass das Licht an der Grenzfläche gebildet aus dem Probenmaterial und dem Reflexionselement 9 reflektiert wird, insbesondere total reflektiert wird. Vorzugsweise handelt es sich bei dem an der Grenzfläche gebildet aus dem Probenmaterial 5 und dem Reflexionselement 9 reflektierten, insbesondere total reflektiertem, Licht um das von dem Probenmaterial 5 reflektierte Licht 3r. Bezüglich der Reflexion an der Grenzfläche gebildet aus dem Probenmaterial und dem Reflexionselement 9 ist hier auf untenstehende Ausführungen im Rahmen der Fig. 3a und der Fig. 3b verwiesen.

Das von dem Probenmaterial reflektierte Licht 3r wird anschließend, wie ebenfalls in Fig. 2a und Fig. 2b gezeigt, mittels eines weiteren Spiegels 6 zu zumindest einem Polarisator 10 gelenkt.

Mittels des Polarisators 10 wird vorzugsweise das von dem Probenmaterial reflektierte Licht 3r in den ersten Polarisationszustand und den zweiten Polarisationszustand aufgeteilt.

Vorteilhafterweise ist der Polarisator 10 ausgewählt aus der Gruppe: Polarisator basierend auf Doppelbrechung, bevorzugt Polarisationsprisma, weiter bevorzugt Nicolsches Prisma, Rochon-Prisma, Glan-Thomson-Prisma, Polarisator basierend auf Dichroismus, bevorzugt J-Folie und/oder H-Folie, und/oder Polarisator basierend auf Reflexion, bevorzugt Brewster-Fenster.

Hierbei ist es von Vorteil, wenn sich der erste und zweite Polarisationszustand unterscheiden, insbesondere wenn der erste und der zweite

Polarisationszustand linear polarisierte Zustände mit zueinander senkrechter Schwingungsebene sind, wobei vorzugsweise der erste Polarisationszustand parallel polarisiertes Licht und der zweite Polarisationszustand senkrecht polarisiertes Licht ist.

Bei dem in Fig. 2a und Fig. 2b gezeigten Polarisator 10 handelt es sich beispielsweise um einen Linearpolarisator, insbesondere welcher sequentiell in Abhängigkeit eines steuerbaren Zustands Licht zweier linear polarisierter Zustände mit zueinander senkrechter Schwingungsebene herausfiltern kann.

Anschließend wird insbesondere die Intensität des von Probenmaterial reflektierten Lichts 3r des ersten Polarisationszustands und die Intensität des von dem Probenmaterial reflektierten Lichts 3r des zweiten Polarisationszustands, wie in Fig. 2a und in Fig. 2b gezeigt, mittels der Detektoreinrichtung 8 bestimmt.

Bevorzugt ist hierbei die Detektoreinrichtung 8 ein Photodetektor ausgewählt aus der Gruppe: Photozelle, Photomultiplier, Mikrokanalplatten-Photomultiplier, CMOS-Sensor, CCD-Sensor, Photodiode, Phototransistor, Photowiderstand, Bolometer, pyroelektrischer Sensor, Pyrometer, Thermoelement und/oder Golay-Zelle. Bei der in Fig. 2a und Fig. 2b gezeigten Detektoreinrichtung 8 handelt es sich beispielsweise um einen Photomultiplier.

In der in Fig. 2a und Fig. 2b gezeigten Recheneinheit 11 wird anschließend das Verhältnis der Intensität des von dem Probenmaterial reflektierten Lichts 3r des ersten Polarisationszustands und der Intensität des von dem Probenmaterial reflektierten Lichts 3r des zweiten Polarisationszustands gebildet.

Bevorzugt wird dies, für eine Vielzahl von Wellenlängen für Licht aus dem infraroten Wellenlängenbereich, bevorzugt aus dem nahen und/oder dem mittleren und/oder dem fernen Infrarotbereich, weiter bevorzugt für Licht aus dem Wellenlängenbereich zwischen 0,8 μm und 1000 μm, noch weiter bevorzugt für Licht aus dem Wellenlängenbereich zwischen 2,5 μm und 25 μm, ferner noch weiter bevorzugt für Licht aus dem Wellenlängenbereich zwischen 8 μm und 12 μm, durchgeführt.

Die in Fig. 2a und Fig. 2b gezeigte Vorrichtung 1 bestimmt hierbei insbesondere in Abhängigkeit des steuerbaren Zustands des Polarisators 10 beispielsweise zuerst die Intensität des von Probenmaterial reflektierten Lichts 3r des ersten Polarisationszustands und anschließend Intensität des von dem Probenmaterial reflektierten Lichts 3r des zweiten Polarisationszustands. Insbesondere sobald die Intensitäten des von dem Probenmaterial reflektierten Lichts 3r für beide Polarisationszustände bestimmt sind, wird das Verhältnis dieser Intensitäten mittels der Recheneinheit 11 gebildet. Hierzu weist die Recheneinheit 11 bevorzugt einen (Arbeits-)Speicher und/oder einen Mikroprozessor auf. In anderen Worten arbeitet die in Fig. 2a und Fig. 2b gezeigte Vorrichtung 1 bevorzugt sequentiell, insbesondere in Abhängigkeit des steuerbaren Zustands des Polarisators 10, welcher beispielsweise in einem ersten steuerbaren Zustand parallel polarisiertes Licht herausfiltert bzw. passieren lässt und in einem zweiten steuerbaren Zustand senkrecht polarisiertes Licht herausfiltert bzw. passieren lässt.

Wie in Fig. 2a und Fig. 2b zu erkennen ist, sind insbesondere die Lichtpfade für die Bestimmung der Intensitäten für das von dem Probenmaterial reflektierte Licht des ersten und des zweiten Polarisationszustands identisch.

Insbesondere aufgrund der Verhältnisbildung der Intensitäten des von dem Probenmaterial reflektierten Lichts 3r für beide Polarisationszustände werden die Auswirkungen des Intensitätsrauschens der Lichtquelle 2 verringert, bevorzugt eliminiert.

So ist es beispielsweise möglich, dass die Auswirkungen des Intensitätsrauschens der Lichtquelle 2 mindestens um den Faktor 2,5, bevorzugt um den Faktor 5, weiter bevorzugt um den Faktor 10, noch weiter bevorzugt um den Faktor 50, ferner noch weiter bevorzugt um den Faktor 100, verringert werden.

Weiter ist es auch möglich, dass das auf das Probenmaterial eingestrahlte Licht 3e und/oder das von dem Probenmaterial reflektierte Licht 3r, insbesondere des ersten und/oder des zweiten Polarisationszustands, zumindest bereichsweise in einem Lichtwellenleiter, bevorzugt in einer Faser, noch weiter bevorzugt in einer Glasfaser, geführt wird.

Auch ist es möglich, dass das auf das Probenmaterial eingestrahlte Licht 3e und/oder das von dem Probenmaterial reflektierte Licht 3r, insbesondere des ersten und/oder des zweiten Polarisationszustands, zumindest bereichsweise freistrahl geführt wird.

Auch ist es möglich, dass das auf das Probenmaterial 5 eingestrahlte Licht 3e und/oder das von dem Probenmaterial 5 reflektierte Licht 3r, insbesondere des ersten und/oder des zweiten Polarisationszustands, ein Lichtstrahl ist, bevorzugt wobei der Lichtstrahl zumindest bereichsweise einen Strahldurchmesser zwischen 10 μm und 10000 μm aufweist.

Fig. 3a zeigt schematisch einen vergrößerten Ausschnitt 12a der Fig. 2a.

Wie in Fig. 3a gezeigt, wird Licht 3e bevorzugt durch das Reflexionselement 9 derart auf das Probenmaterial 5 eingestrahlt, dass das Licht 3r an der Grenzfläche 13 gebildet aus dem Probenmaterial 5 und dem Reflexionselement 9 reflektiert wird, insbesondere total reflektiert wird.

Hierbei ist, wie in Fig. 3a gezeigt, insbesondere innerhalb des Reflexionselements 9, der Winkel ($\alpha$), unter welchem das Licht 3e auf das Probenmaterial 5 eingestrahlt wird, gleich dem Winkel ($\beta$), unter welchem das Licht 3r von dem Probenmaterial 5 reflektiert wird.

Beispielsweise ist es möglich, dass, insbesondere innerhalb des Reflexionselements 9, der Winkel ($\alpha$), unter welchem das Licht 3e auf das Probenmaterial 5 eingestrahlt wird, und der Winkel ($\beta$), unter welchem das Licht 3r von dem Probenmaterial 5 reflektiert wird, zwischen 0° und 90°, bevorzugt zwischen 10° und 80°, beträgt. Beispielsweise betragen die in Fig. 3a gezeigten Winkel ($\alpha$) und ($\beta$) gleich 32°.

Vorteilhafterweise ist der Brechungsindex des Reflexionselements 9 ($n_1$) größer als der Brechungsindex des Probenmaterials 5 ($n_2$). So ist es möglich, dass der Brechungsindex des Reflexionselements 9 ($n_1$) zwischen 2,0 und 4,0, bevorzugt zwischen 2,4 und 2,6, beträgt und/oder dass der Brechungsindex des Probenmaterials 5 ($n_2$) zwischen 1,05 und 1,95, bevorzugt zwischen 1,25 und 1,75, beträgt. Beispielsweise weist das in Fig. 3a gezeigte Probenelement 5 einen Brechungsindex ($n_2$) von 1,33 und das in Fig. 3a gezeigte Reflexionselement 9 einen Brechungsindex ($n_1$) von 2,59 bei einer Wellenlänge von 633 nm auf. Vorzugsweise ist bei dem Verfahren und bei der Vorrichtung 1 die Abhängigkeit des Brechungsindex des gesamten Messaufbaus, insbesondere die Abhängigkeit des Brechungsindex des Probenmaterials 5 und des Reflexionselements 9, von der Wellenlänge vernachlässigbar.

So ist es zweckmäßig, wenn der Winkel ($\alpha$) größer oder gleich dem Winkel ist, für welchen Totalreflexion an der Grenzfläche 13 gebildet aus dem Probenmaterial 5 und dem Reflexionselement 9, insbesondere für das auf das Probenmaterial 5 eingestrahlte Licht 3e, auftritt.

Insbesondere wird der Grenzwinkel ($\Theta_c$), ab welchem Totalreflexion auftritt, wie folgt berechnet:

$$\Theta_c = \text{arscin } (n_2/n_1).$$

Der Grenzwinkel ($\Theta_c$) wird hierbei insbesondere auch als kritischer Winkel bezeichnet. Ab dem kritischen Winkel ($\Theta_c$) kann bevorzugt die elektromagnetische Welle, insbesondere das eingestrahlte Licht 3e, nicht mehr (bzw. nahezu nicht mehr) in das optisch dünnere Medium, insbesondere das Probenmaterial 5 eindringen, und wird stattdessen an der Grenzfläche zwischen dem optisch dichteren und dem optisch dünneren Medium, insbesondere an der Grenzfläche 13 gebildet aus dem Probenmaterial 5 und dem Reflexionselement 9, vollständig reflektiert. Insbesondere ist hierbei der Ausfallswinkel gleich dem Einfallswinkel.

So ist es möglich, dass das auf das Probenmaterial 5 eingestrahlte Licht 3e, insbesondere aufgrund des Winkels ($\alpha$), unter welchem das Licht auf das Probenmaterial 5 eingestrahlt wird, in dem Probenmaterial 5 nicht ausbreitungsfähig ist.

Vorteilhafterweise ist das Reflexionselement 9 ein Lichtwellenleiter, insbesondere ein Lichtwellenleiter, in welchem Licht aufgrund von Totalreflexion geführt wird. Beispielsweise ist ein derartiger Lichtwellenleiter ein Prisma oder eine Faser, insbesondere ohne Mantel.

Erfindungsgemäß ist das Reflexionselement 9 ein ATR-Element, insbesondere ein ATR-Kristall.

So ist es möglich, dass das Reflexionselement 9, bevorzugt das ATR-Element, weiter bevorzugt der ATR-Kristall, Zinkselenid (ZnSe), Germanium (Ge), Thalliumbromidiodid (KRS-5), Silicium (Si), AMTIR (amorphous material transmitting infrared radiation), insbesondere AMTIR-1 (GeAsSe), und/oder Diamant umfasst.

Ferner ist es auch denkbar, dass insbesondere bei FEWS-Infrarotspektroskopieverfahren und/oder in einem FEWS-Infrarotspektrometer das ATR-Element Chalkogenidglas-Fasern umfasst.

Ferner ist es zweckmäßig, wenn das auf das Probenmaterial 5 eingestrahlte Licht 3e unpolarisiertes Licht ist, bevorzugt wenn das auf das Probenmaterial 5 eingestrahlte Licht 3e eine Polarisation unter 45° zur Einfallsebene aufweist.

Fig. 3b zeigt schematisch einen vergrößerten Ausschnitt 12b der Fig. 3a.

Wie in Fig 3b gezeigt, wird das Licht bevorzugt derart auf das Probenmaterial 5 durch das Reflexionselement 9 eingestrahlt, dass sich eine elektromagnetische Welle an der Oberfläche des Reflexionselements 9 ausbildet, welche in das Probenmaterial 5 eindringt, insbesondere wobei die Feldstärke der elektromagnetischen Welle exponentiell abnimmt. Bevorzugt handelt es bei der elektromagnetischen Welle an der Oberfläche des Reflexionselements 9, insbesondere deren Feldstärke exponentiell abnimmt, um eine sog. abklingende (evaneszente) Welle, welche vorzugsweise bei Totalreflexion an der Grenzfläche 13 gebildet aus dem Probenmaterial 5 und dem Reflexionselement 9 entsteht. Insbesondere wenn das Probenmaterial 5 nun Licht absorbiert, fällt die Reflexion des Lichtstrahls, insbesondere des an der Grenzfläche 13 gebildet aus dem Probenmaterial 5 und dem Reflexionselement 9 reflektierten Lichts 3r, schwächer aus, da die abklingende (evaneszente) Welle, insbesondere das evaneszente Feld, durch das Probenmaterial 5 Verluste erfährt. So ist eine beispielhafte Verteilung der Feldstärke vor und hinter der Grenzfläche 13 gebildet aus dem Probenmaterial 5 und dem Reflexionselement 9 in Fig. 3b, insbesondere für eine einfallende ebene Welle, gezeigt. Wie in Fig. 3b zu erkennen ist, fällt die Feldstärke im Probenmaterial 5 exponentiell ab.

Fig. 4a bis Fig. 4c zeigen Diagramme.

Fig. 4a und Fig. 4b zeigen beispielhaft die Reflexion an einer Grenzfläche zwischen einem Reflexionselement aus ZnSe ($n_1$ = 2,59) und dem Probenmaterial Wasser ($n_2$ = 1,33) für die senkrechte Polarisation in Fig. 4a und für die parallele Polarisation in Fig. 4b jeweils für den verlustfreien Fall 15a und den verlustbehafteten Fall 15b, insbesondere wobei der Extinktionskoeffizient (k) für den verlustbehafteten Fall k = 0,0508 ist. Die Diagrammachsen 14a zeigen hierbei jeweils den Einfallswinkel in Grad und die Diagrammachsen 14b zeigen die Reflektivität für die senkrechte Polarisation in Fig. 4a und für die parallele Polarisation in Fig. 4b. Die Diagrammkurven 15a und 15b wurden hierbei beispielhaft für die Wellenlänge von 10 μm berechnet, da in diesem Wellenlängenbereich Wasser Licht stark absorbiert. Wie insbesondere Fig. 4a und Fig. 4b zu entnehmen ist, ist bei einem Winkel, welcher größer als der kritische Winkel der Totalreflexion ist, die Dämpfung für parallel polarisiertes Licht stärker als die Dämpfung für senkrecht polarisiertes Licht. Ferner weisen beide Polarisationsrichtungen insbesondere auch einen unterschiedlichen Phasenversatz auf (hier nicht gezeigt).

Wie bereits in Fig. 4a und Fig. 4b zu erkennen, hat insbesondere der Extinktionskoeffizient des Probenmaterials für parallel polarisiertes Licht einen größeren Einfluss auf die Reflexion als für senkrecht polarisiertes Licht. Somit ist insbesondere zu erwarten, dass sich eine Änderung des Extinktionskoeffizienten auf die Reflexion von parallel polarisiertem Licht am Reflexionselement stärker auswirkt als auf die Reflexion von senkrecht polarisiertem Licht. Um insbesondere diese Abhängigkeit zu bestätigen wird im Folgenden die relative Änderung der Reflexion am Reflexionselement in Abhängigkeit einer relativen Änderung des Extinktionskoeffizienten des Probenmaterials bestimmt. Wird insbesondere die Änderung des Extinktionskoeffizient (k) wie folgt definiert:

$$\Delta k = k_0 \cdot \epsilon \text{ für } \epsilon << 1.$$

Die Änderungen der Reflexion ist insbesondere wie folgt definiert:

$$\Delta R = R(k_0) - R(k_0 + \Delta k) = R(k_0) - R(k_0(1 + \epsilon)).$$

Weiter ist die relative Änderung der Reflexion definiert als:

$$R_{rel} = \Delta R / R(k_0).$$

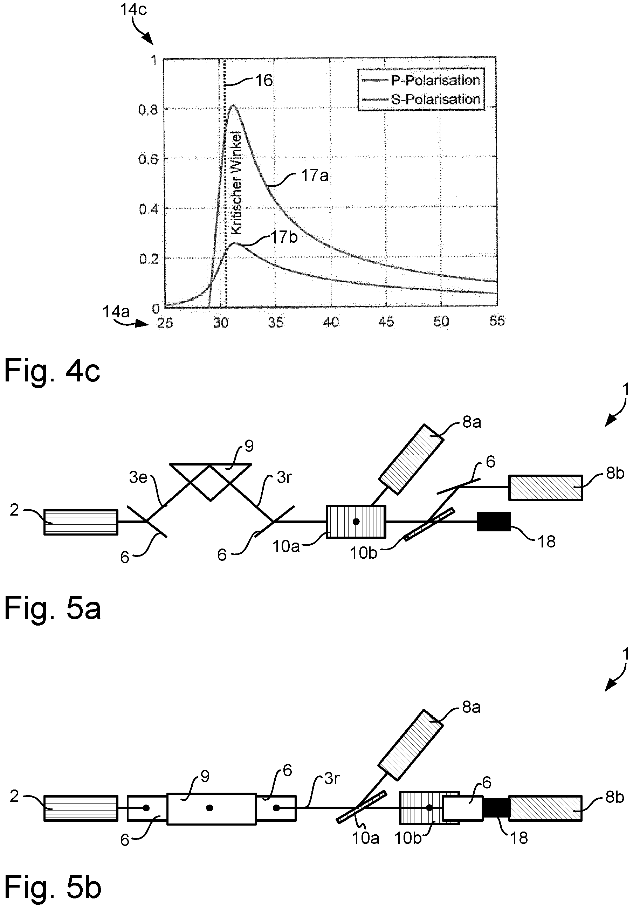

In Fig. 4c ist insbesondere diese Polarisationsabhängigkeit der relativen Änderung der Reflexion für parallel polarisiertes Licht 17a und senkrecht polarisiertes Licht 17b am Reflexionselement gezeigt, wobei insbesondere die Diagrammachse 14a hierbei den Einfallswinkel zum Lot auf der Grenzfläche in Grad zeigt und die Diagrammachse 14c die relative Änderung der Reflexion am Reflexionselement zeigt. Wie Fig. 4c insbesondere zu entnehmen ist, ist der Einfluss des Extinktionskoeffizienten umso stärker je näher sich der Einfallswinkel, insbesondere der Winkel ($\alpha$), unter welchem das Licht auf das Probenmaterial eingestrahlt wird, am kritischen Winkel 16 der Totalreflexion liegt. Weiter kann der Fig. 4c entnommen werden, dass insbesondere eine Variation des Extinktionskoeffizienten für die unterschiedlichen Polarisationen des Lichts zu unterschiedlich starken relativen Änderungen der Reflexion führen. Wird nun bevorzugt das Verhältnis zwischen den Reflexionskoeffizienten beider Polarisationen gebildet, bleibt eine Abhängigkeit vom Extinktionskoeffizienten bestehen. Diese Verhältnisbildung wird wie oben dargelegt in dem Verfahren und der Vorrichtung zur Bestimmung optischer Eigenschaften eines Probenmaterials genutzt. Insbesondere ist es möglich, dass aufgrund der Verhältnisbildung zwar etwas an Signalintensität verloren geht, bevorzugt weil in beiden Polarisationszuständen eine Abhängigkeit vom Extinktionskoeffizienten besteht, insgesamt jedoch ein Signal erhalten bleibt, vorzugsweise wobei die Auswirkungen des Intensitätsrauschens der Lichtquelle und/oder Fluktuationen des Messaufbaus, wie oben dargelegt, verringert bzw. eliminiert werden.

Hierbei ist insbesondere zu bemerken, dass diese Abhängigkeit vorteilhafterweise auch für andere Polarisationszustände als die parallele und die senkrechte Polarisation besteht. Die maximale Differenz zwischen den Polarisationen wird jedoch insbesondere bei anderen Polarisationszuständen geringer, so dass bevorzugt folglich Signalstärke bei anderen Polarisationen verloren geht. In anderen Worten wird insbesondere der Abstand der maximalen relativen Änderung der Reflexion für andere Polarisationszustände als die in Fig. 4c gezeigten geringer, wobei vorzugsweise die prinzipielle Abhängigkeit erhalten bleibt. Ferner kann der Fig. 4c insbesondere auch entnommen werden, dass die Polarisationsabhängigkeit der relativen Änderungen der Reflexion am Reflexionselement eine Winkelabhängigkeit aufweisen, die Winkeleinstellung jedoch vorteilhafterweise in einem relativ großen Winkelbereich möglich ist, wobei der Winkelbereich bevorzugt zwischen 0° und 5°, weiter bevorzugt zwischen 0,5° und 3°, über dem kritischen Winkel der Totalreflexion liegt.

Hier sei darauf hingewiesen, dass es beispielsweise auch möglich ist, dass das Probenmaterial 5 flüssig und/oder fest ist. So ist es möglich, dass das Probenmaterial 5 beispielsweise Wasser, Bakterien und/oder Feststoffe umfasst. Ferner ist es denkbar, dass das Probenmaterial 5 einen oder mehrere Stoffe ausgewählt aus der Gruppe:

Wasser, Bakterien, Viren, Feststoffe, Lösungsmittel, Lösungsmittelmischungen, Lackschichten, Polymerfolien, Duroplasten, Körperflüssigkeiten, insbesondere Blut, ein- oder mehrzellige Organismen, Pilze, Pflanzen, insbesondere Algen, umfasst.

Fig. 5a bis Fig. 5c zeigen schematisch Vorrichtungen 1 in Seitenansicht und in Draufsicht.

Die in Fig. 5a und in Fig. 5b gezeigte Vorrichtung 1 umfasst eine Lichtquelle 2, die Spiegel 6, ein Reflexionselement 9, die Polarisatoren 10a und 10b und die Detektoreinrichtungen 8a und 8b sowie einen optischen Sumpf 18.

Mittels der in der Fig. 5a und der Fig. 5b gezeigten Vorrichtung 1 ist es möglich, ein Verfahren, bevorzugt ein Spektroskopieverfahren, weiter bevorzugt ein ATR-Infrarotspektroskopieverfahren, zur Bestimmung optischer Eigenschaften eines Probenmaterials durchzuführen, insbesondere wobei das Verfahren folgende Schritte umfasst: a) Bestimmen einer ersten Intensität von von dem Probenmaterial reflektiertem Licht 3r eines ersten Polarisationszustands; b) Bestimmen einer zweiten Intensität des von dem Probenmaterial reflektierten Lichts 3r eines zweiten Polarisationszustands; c) Verhältnisbildung der ersten Intensität und der zweiten Intensität oder umgekehrt. Der Übersichtlichkeit halber ist auch in der Fig. 5a und der Fig. 5b das Probenmaterial, welches insbesondere in direktem Kontakt auf das Reflexionselement 9 aufgebracht ist, nicht dargestellt.

Weiter es möglich, dass die Vorrichtung 1, bevorzugt ein Spektrometer, weiter bevorzugt ein ATR-Infrarotspektrometer, ein HATR- Infrarotspektrometer, ein FEWS- Infrarotspektrometer und/oder ein FTIR- Infrarotspektrometer, ist.

Bezüglich der Ausgestaltung der Lichtquelle 2, des Reflexionselements 9 und der Detektoreinrichtungen 8a und 8b ist hier insbesondere auf obige Ausführungen verwiesen. Die in Fig. 5a und 5b gezeigte Vorrichtung 1 entspricht im Wesentlichen der in Fig. 2a und 2b gezeigten Vorrichtung mit dem Unterschied, dass die Vorrichtung anstatt des Polarisators 10 die Polarisatoren 10a und 10b umfasst und anstatt der Detektoreinrichtung 8 die Detektoreinrichtungen 8a und 8b. Weiter umfasst die in Fig. 5a und 5b gezeigte Vorrichtung ferner noch den optischen Sumpf 18.

Wie in Fig. 5a und 5b gezeigt, wird das von dem Reflexionselement 9 und/oder dem Probenmaterial 5 reflektierte Licht 3r, insbesondere das an der Grenzfläche gebildet aus dem Probenmaterial 5 und dem Reflexionselement 9 reflektierte Licht 3r, vorzugsweise mittels der Polarisatoren 10a und 10b in den ersten und zweiten Polarisationszustand getrennt. Bevorzugt handelt sich bei den Polarisatoren um Brewster-Fenster. Vorteilhafterweise wird durch das Brewster-Fensters 10a die senkrechte Polarisation und durch das Brewster-Fensters 10b die parallele Polarisation reflektiert oder umgekehrt. Die anderen Polarisationen werden vorteilhafterweise durch die Brewster-Fenster 10a und 10b transmittiert und gelangen in den optischen Sumpf 18, insbesondere wobei dieser dafür sorgt, dass diese das Messergebnis nicht störend beeinflussen. Weiter werden, wie in Fig. 5a und 5b gezeigt, die Intensitäten der beiden Polarisationszustände, insbesondere des ersten und/oder des zweiten Polarisationszustands, anschließend mittels der Detektoreinrichtungen 8a und 8b bestimmt. So weist die in Fig. 5a und 5b gezeigte Vorrichtung 1 die Detektoreinrichtung 8a zur Bestimmung der Intensität des von dem Probenmaterial reflektierten Lichts 3r des ersten Polarisationszustands und die Detektoreinrichtung 8b zur Bestimmung der Intensität des von dem Probenmaterial reflektierten Lichts 3r des zweiten Polarisationszustands auf.

Anschließend ist es möglich, dass Verhältnis der Intensitäten des von dem Probenmaterial reflektierten Lichts 3r des ersten Polarisationszustands und des zweiten Polarisationszustands zu bilden, insbesondere wobei diesbezüglich auf obige Ausführungen verwiesen ist.

Insbesondere zur weiteren Rauschunterdrückungen ist es möglich, dass zumindest eine Detektoreinrichtung 8a und/oder 8b ein Synchrondetektor (lock-in) ist.

Mittels der in Fig. 5a und 5b gezeigten Vorrichtung 1 ist es beispielsweise möglich, die Intensität des von dem Probenmaterial reflektierten Lichts, insbesondere des an der Grenzfläche gebildet aus dem Probenmaterial und dem Reflexionselement 9 reflektierten Lichts 3r, des ersten und des zweiten Polarisationszustands simultan zu bestimmen. Insbesondere aufgrund der zwei Detektoreinrichtungen ist eine simultane Detektion der beiden Polarisationen möglich, insbesondere wobei das Probenmaterial gleichmäßig, insbesondere mit Licht einer Polarisation unter 45° zur Einfallsebene angeregt wird.

Ferner ist es bevorzugt, dass die Lichtpfade für das von dem Probenmaterial reflektierte Licht 3r des ersten und des zweiten Polarisationszustands, im Wesentlichen identisch sind. Vorzugsweise unterscheiden sich die Lichtpfade um weniger als 10 mm, bevorzugt um weniger als 1 mm.

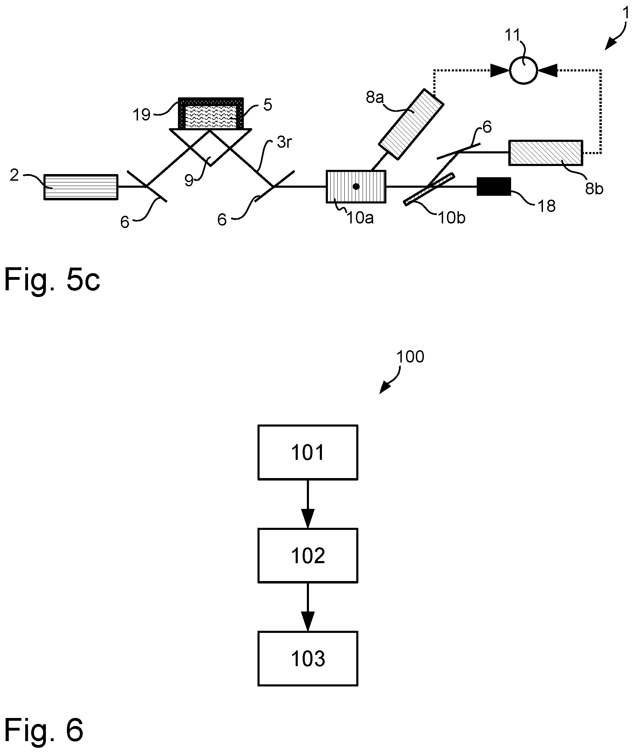

Die in Fig. 5c gezeigte Vorrichtung 1 entspricht der in den Fig. 5a und 5b gezeigten Vorrichtung 1 mit dem Unterschied, dass zum einen beispielhaft das Probenmaterial 5 gezeigt ist, wobei bevorzugt das Probenmaterial 5 mittels einer Fixierungseinheit 19 derart fixiert ist, dass das Probenmaterial 5 direkt auf bzw. an das Reflexionselement 9 auf- bzw. angeordnet ist. Vorzugsweise ist kein weiteres Material, wie beispielsweise Luft, zwischen dem Probenmaterial 5 und dem Reflexionselement 9 angeordnet. Weiter ist in der Fig. 5c auch eine Recheneinheit 11 zur Verhältnisbildung der Intensitäten des von dem Probenmaterial reflektierten Lichts 3r des ersten und des zweiten Polarisationszustands dargestellt. Bezüglich der Ausgestaltung dieser und der weiteren in Fig. 5c gezeigten Elemente ist hier auf obige Ausführungen verwiesen.

So ist es, wie in Fig. 5c gezeigt, möglich, wenn die Vorrichtung 1 eine der folgenden Einheiten umfasst:- eine Lichtquelle 2, insbesondere zum Einstrahlen von Licht auf das Probenmaterial 5 durch ein Reflexionselement 9 derart, dass das Licht an einer Grenzfläche gebildet aus dem Probenmaterial 5 und dem Reflexionselement 9 reflektiert wird, insbesondere total, reflektiert wird; - ein Reflexionselement 9, bevorzugt ein ATR-Element, weiter bevorzugt ein ATR-Kristall, insbesondere wobei das Probenmaterial 5 eine Grenzfläche mit dem Reflexionselement 9 ausbildet; - eine Fixierungseinheit 19 zum Fixieren des Probenmaterials 5 auf dem Reflexionselement 9; - ein oder mehrere Spiegel 6, insbesondere zum Umlenken des Lichts; - zumindest einen optischen Sumpf 18.

Weiter ist es zweckmäßig, wenn die Vorrichtung 1 weiter eine der folgenden Einrichtungen umfasst: - einen oder mehrere Lichtwellenleiter, bevorzugt ein oder mehrere Fasern, weiter bevorzugt ein oder mehrere Glasfasern, insbesondere zum bereichsweise führen des auf das Probenmaterial 5 eingestrahlten Lichts und/oder des von dem Probenmaterial 5 reflektierten Lichts 3r; - einen oder mehrere Wellenlängenselektoren, bevorzugt einen oder mehrere Monochromatoren, insbesondere zur spektralen Isolierung einer vorbestimmten Wellenlänge, vorzugsweise des auf das Probenmaterial 5 eingestrahlten Lichts.

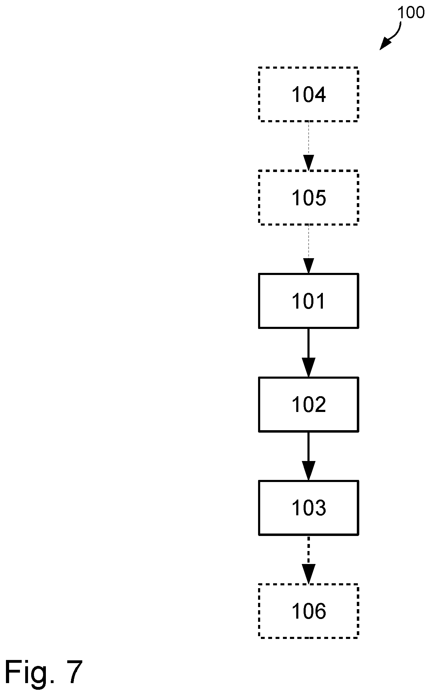

Fig. 6 und Fig. 7 zeigen schematisch Verfahrensschritte zur Bestimmung optischer Eigenschaften eines Probenmaterials.

Fig. 6 zeigt schematisch ein Flussdiagramm eines Verfahrens 100 umfassend die Verfahrensschritte 101, 102 und 103 zur Bestimmung optischer Eigenschaften eines Probenmaterials. Bevorzugt handelt es sich dem in Fig. 6 durchgeführten Verfahren 100 um ein Spektroskopieverfahren, weiter bevorzugt um ein ATR-Infrarotspektroskopieverfahren. Weiter es auch möglich, dass das Verfahren ein HATR- Infrarotspektroskopieverfahren, ein FEWS-Infrarotspektroskopieverfahren und/oder ein FTIR-Infrarotspektroskopieverfahren, ist.

In dem Schritt 101 erfolgt das Bestimmen einer ersten Intensität von von dem Probenmaterial reflektiertem Licht eines ersten Polarisationszustands. In dem Schritt 102 erfolgt das Bestimmen einer zweiten Intensität des von dem Probenmaterial reflektierten Lichts eines zweiten Polarisationszustands. In dem Schritt 103 erfolgt die Verhältnisbildung der ersten Intensität und der zweiten Intensität oder umgekehrt.

Weiter ist es von Vorteil, wenn der Schritt 103 nach den Schritten 101 und 102 durchgeführt wird.

Bezüglich weiterer möglicher Ausgestaltungen des in Fig. 6 gezeigten Verfahrens 100 ist hier auf obige Ausführungen, insbesondere welche auch im Zusammenhang mit der oben erläuterten Vorrichtung dargelegt wurden, verwiesen.

Fig. 7 zeigt schematisch ein Flussdiagramm umfassend die Verfahrensschritte 101, 102, 103, 104, 105 und 106 zur Bestimmung optischer Eigenschaften eines Probenmaterials. Die Schritte 104, 105 und 106 sind optional und daher gestrichelt dargestellt.

In dem optionalen Schritt 104 erfolgt das Einstrahlen von Licht auf das Probenmaterial durch ein Reflexionselement derart, dass das Licht an der Grenzfläche gebildet aus dem Probenmaterial und dem Reflexionselement reflektiert wird, insbesondere total reflektiert wird.

In dem optionalen Schritt 105 erfolgt anschließend das Aufteilen des von dem Probenmaterial reflektierten Lichts in den ersten Polarisationszustand und den zweiten Polarisationszustand, bevorzugt mittels zumindest eines Polarisators, weiter bevorzugt mittels eines ersten Polarisators und eines zweiten Polarisators.

Die Schritte 101, 102 und 103 entsprechen den in Fig. 6 gezeigten Schritten, so dass diesbezüglich auf obige Ausführungen verwiesen ist.

Es ist von Vorteil, wenn in dem Schritt 103 aufgrund der Verhältnisbildung der ersten Intensität und der zweiten Intensität oder umgekehrt die Auswirkungen des Intensitätsrauschens der Lichtquelle verringert, bevorzugt eliminiert, werden.

In dem optionalen Schritt 106 können anschließend weitere Verfahrensschritte zur weiteren Rauschunterdrückung, wie beispielsweise eine Synchrondetektion, erfolgen.

Ferner ist es möglich, das oben beschriebene Verfahren 100 und/oder die oben beschriebene Vorrichtung 1 für die Spektralanalyse, insbesondere des Probenmaterials, anzuwenden. Bevorzugt basiert die Spektralanalyse, insbesondere des Probenmaterials, wie oben dargelegt, auf der Totalreflexion, vorzugsweise der frustrierten Totalreflexion.

So ist es auch möglich, dass das oben beschriebene Verfahren 100 und/oder die oben beschriebene Vorrichtung 1 zur bzw. für die Unterdrückung des Intensitätsrauschens von Lichtquellen, insbesondere bei der Spektralanalyse, verwendet wird.

Bezugszeichenliste

| 1 | Vorrichtung |
|---|---|
| 2 | Lichtquelle |
| 3 | Licht, Lichtstrahl |
| 3e | eingestrahltes Licht |

| | |
|---|---|
| 3r | reflektiertes Licht |
| 4 | Strahlenteiler |
| 5 | Probenmaterial |
| 6 | (Umlenk-)Spiegel |
| 7 | variables Dämpfungsglied |
| 8, 8a, 8b | Detektoreinrichtung(en) |
| 9 | Reflexionselement |
| 10, 10a, 10b | Polarisator(en) |
| 11 | Recheneinheit |
| 12a, 12b | Ausschnitt(e) |
| 13 | Grenzfläche |
| 14a, 14b, 14c | Diagrammachse(n) |
| 15a, 15b | Diagrammkurve(n) |
| 16 | kritischer Winkel |
| 17a, 17b | Diagrammkurve(n) |
| 18 | optischer Sumpf |
| 19 | Fixierungseinheit |
| 100 | Verfahren |
| 101, 102, 103, 104, 105, 106 | Verfahrensschritte |
| 1000 | Messaufbau |

**Patentansprüche**

1. ATR-Infrarotspektroskopieverfahren zur Bestimmung optischer Eigenschaften eines flüssigen Probenmaterials (5), umfassend den folgenden Schritt:

   Einstrahlen (104) von Licht (3e) aus dem infraroten Wellenlängenbereich auf das Probenmaterial (5) durch ein Reflexionselement (9) derart, dass das Licht (3e) an der Grenzfläche (13) gebildet aus dem Probenmaterial (5) und dem Reflexionselement (9) total reflektiert wird, wobei das Reflexionselement (9) ein ATR-Element ist; und **gekennzeichnet durch** die weiteren Schritte:

   a) Bestimmen (101) einer ersten Intensität des an der Grenzfläche reflektierten Lichts (3r) eines ersten Polarisationszustands;
   b) Bestimmen (102) einer zweiten Intensität des an der Grenzfläche (5) reflektierten Lichts (3r) eines zweiten Polarisationszustands;
   c) Verhältnisbildung (103) der ersten Intensität und der zweiten Intensität oder umgekehrt;

   wobei der erste Polarisationszustand parallel polarisiertes Licht und der zweite Polarisationszustand senkrecht polarisiertes Licht ist.

2. ATR-Infrarotspektroskopieverfahren nach Anspruch 1,
   **dadurch gekennzeichnet,**
   **dass** das Verfahren weiter folgenden Schritt umfasst, insbesondere welcher vor den Schritten a) und b) durchgeführt wird:

   - Aufteilen (105) des von dem Probenmaterial (5) reflektierten Lichts (3r) in den ersten Polarisationszustand und den zweiten Polarisationszustand, bevorzugt mittels zumindest eines Polarisators (10, 10a, 10b), weiter bevorzugt mittels eines ersten Polarisators (10a) und eines zweiten Polarisators (10b).

3. ATR-Infrarotspektroskopieverfahren nach Anspruch 2,
   **dadurch gekennzeichnet,**
   **dass** der zumindest eine Polarisator (10, 10a, 10b), insbesondere der erste Polarisator (10a) und der zweite Polarisator (10b), ausgewählt ist aus der Gruppe: Polarisator basierend auf Doppelbrechung, bevorzugt Polarisationsprisma, weiter bevorzugt Nicolsches Prisma, Rochon-Prisma, Glan-Thomson-Prisma, Polarisator basierend auf Dichroismus, bevorzugt J-Folie und/oder H-Folie, und/oder Polarisator basierend auf Reflexion, bevorzugt Brewster-Fenster.

4. ATR-Infrarotspektroskopieverfahren nach einem der vorhergehenden, **dadurch gekennzeichnet,**

**dass** das Reflexionselement (9) ein ATR-Kristall ist.

5. ATR-Infrarotspektroskopieverfahren nach einem der vorhergehenden Ansprüche,
   **dadurch gekennzeichnet,**
   **dass** das auf das Probenmaterial (5) eingestrahlte Licht (3e) unpolarisiertes Licht ist.

6. ATR-Infrarotspektroskopieverfahren nach einem der vorhergehenden Ansprüche,
   **dadurch gekennzeichnet,**
   **dass** das auf das Probenmaterial (5) eingestrahlte Licht (3e) Licht aus dem nahen und/oder dem mittleren und/oder dem fernen Infrarotbereich, bevorzugt Licht aus dem Wellenlängenbereich zwischen 0,8 $\mu$m und 1000 $\mu$m, weiter bevorzugt Licht aus dem Wellenlängenbereich zwischen 2,5 $\mu$m und 25 $\mu$m, noch weiter bevorzugt Licht aus dem Wellenlängenbereich zwischen 8 $\mu$m und 12 $\mu$m, ist.

7. ATR-Infrarotspektroskopieverfahren nach einem der vorhergehenden Ansprüche,
   **dadurch gekennzeichnet,**
   **dass** das auf das Probenmaterial (5) eingestrahlte Licht (3e) von einer Lichtquelle (2) abgestrahlt wird, insbesondere wobei die Lichtquelle (2) ausgewählt ist aus der Gruppe: Laser, bevorzugt Halbleiterlaser, weiter bevorzugt Quantenkaskadenlaser (QCL), und/oder thermische Strahler, bevorzugt Glühlampe, Nernstlampe, Widerstands-Heizelemente aus Siliziumcarbid oder Kohlenbogenlampe.

8. ATR-Infrarotspektroskopieverfahren nach einem der vorhergehenden Ansprüche,
   **dadurch gekennzeichnet,**
   **dass** die Lichtpfade in Schritt a) (101) und b) (102), insbesondere für das von dem Probenmaterial (5) reflektierte Licht (3r) des ersten und des zweiten Polarisationszustands, im Wesentlichen identisch sind.

9. ATR-Infrarotspektroskopieverfahren nach einem der vorhergehenden Ansprüche,
   **dadurch gekennzeichnet,**

   **dass** die Schritte a) (101) und b) (102) simultan erfolgen, insbesondere
   **dass** die Intensität des von dem Probenmaterial (5) reflektierten Lichts (3r) des ersten und der zweiten Polarisationszustands simultan bestimmt werden.

10. ATR-Infrarotspektrometer zur Bestimmung optischer Eigenschaften eines flüssigen Probenmaterials (5) umfassend:

    - ein Reflexionselement (9), wobei das Reflexionselement (9) ein ATR-Element ist, und eine Fixierungseinheit (19), welche eingerichtet ist zum Fixieren des Probenmaterials (5) derart, dass das Probenmaterial (5) direkt an dem Reflexionselement (9) angeordnet ist;
    - eine Lichtquelle, welche eingerichtet ist zum Einstrahlen von Licht aus dem infraroten Wellenlängenbereich auf das Probenmaterial (5) durch das Reflexionselement (9) derart, dass das Licht (3e) an der Grenzfläche (13) gebildet aus dem Probenmaterial (5) und dem Reflexionselement (9) total reflektiert wird;

    **gekennzeichnet durch**

    - zumindest eine Detektoreinrichtung (8, 8a, 8b), welche eingerichtet ist zur Bestimmung einer ersten Intensität von von dem Probenmaterial (5) reflektiertem Licht (3r) eines ersten Polarisationszustands und zur Bestimmung einer zweiten Intensität des von dem Probenmaterial (5) reflektierten Lichts (3r) eines zweiten Polarisationszustands, wobei der erste Polarisationszustand parallel polarisiertes Licht und der zweite Polarisationszustand senkrecht polarisiertes Licht ist;
    - zumindest eine Recheneinheit (11) welche eingerichtet ist zur Verhältnisbildung der ersten Intensität und der zweiten Intensität oder umgekehrt.

11. ATR-Infrarotspektrometer nach Anspruch 10,
    **dadurch gekennzeichnet,**
    **dass** das ATR-Infrarotspektrometer eine erste Detektoreinrichtung (8a) und eine zweite Detektoreinrichtung (8b) aufweist, wobei die erste Detektoreinrichtung (8a) eingerichtet ist zur Bestimmung der ersten Intensität des von dem Probenmaterial (5) reflektierten Lichts (3r) des ersten Polarisationszustands, und die zweite Detektoreinrichtung (8b) eingerichtet ist zur Bestimmung der zweiten Intensität des von dem Probenmaterial (5) reflektierten Lichts (3r) des zweiten Polarisationszustands.

**12.** ATR-Infrarotspektrometer nach einem der Ansprüche 10 oder 11,
**dadurch gekennzeichnet,**
**dass** das ATR-Infrarotspektrometer weiter zumindest einen Polarisator (10, 10a, 10b) aufweist, welcher eingerichtet ist zum Aufteilen des von dem Probenmaterial (5) reflektierten Lichts in den ersten Polarisationszustand und den zweiten Polarisationszustand, insbesondere dass das ATR-Infrarotspektrometer einen ersten Polarisator (10a) und einen zweiten Polarisator (10b) aufweist, wobei der erste Polarisator (10a) eingerichtet ist zum Aufteilen des von dem Probenmaterial (5) reflektierten Lichts (3r) in den ersten Polarisationszustand und der zweite Polarisator (10b) eingerichtet ist zum Aufteilen des von dem Probenmaterial (5) reflektierten Lichts (3r) in den zweiten Polarisationszustand.

**Claims**

**1.** An ATR infrared spectroscopy method, for determining optical properties of a liquid sample material (5), comprising the following step:

irradiating (104) light (3e) from the infrared wavelength range onto the sample material (5) through a reflection element (9) in such a way that the light (3e) is totally reflected at the interface (13) formed by the sample material (5) and the reflection element (9), wherein the reflection element (9) is an ATR-Element;
and **characterized by** the following steps:

a) determining (101) a first intensity of light (3r) reflected at the interface in a first polarisation state;
b) determining (102) a second intensity of the light (3r) reflected at the interface in a second polarisation state;
c) forming the ratio (103) of the first intensity and the second intensity, or vice versa;

wherein the first polarisation state is parallel polarised light and the second polarisation state is perpendicular polarised light.

**2.** The ATR infrared spectroscopy method according to claim 1,
**characterised in that**
the method further comprises the following step, in particular which is carried out before steps a) and b):

- splitting (105) the light (3r) reflected from the sample material (5) into the first polarisation state and the second polarisation state, preferably by means of at least one polariser (10, 10a, 10b), further preferably by means of a first polariser (10a) and a second polariser (10b).

**3.** The ATR infrared spectroscopy method according to claim 2,
**characterised in that**
the at least one polariser (10, 10a, 10b), in particular the first polariser (10a) and the second polariser (10b), is selected from the group of: polarisers based on birefringence, preferably polarisation prism, further preferably Nicol prism, Rochon prism, Glan-Thomson prism, polariser based on dichroism, preferably J-film and/or H-film, and/or polariser based on reflection, preferably Brewster window.

**4.** The ATR infrared spectroscopy method according to any one of the preceding claims,
**characterised in that**,
the reflection element (9) is an ATR crystal.

**5.** The ATR infrared spectroscopy method according to any one of the preceding claims,
**characterised in that**
the light (3e) irradiated onto the sample material (5) is unpolarised light.

**6.** The ATR infrared spectroscopy method according to any one of the preceding claims,
**characterised in that**
the light (3e) irradiated onto the sample material (5) is light from the near- and/or the mid- and/or the far-infrared range, preferably light from the wavelength range between 0.8 $\mu$m and 1000 $\mu$m, further preferably light from the wavelength range between 2.5 $\mu$m and 25 $\mu$m, still further preferably light from the wavelength range between 8 $\mu$m and 12 $\mu$m.

**7.** The ATR infrared spectroscopy method according to any one of the preceding claims,

**characterised in that**

the light (3e) irradiated onto the sample material (5) is emitted by a light source (2), in particular wherein the light source (2) is selected from the group of: laser, preferably semiconductor laser, further preferably quantum cascade laser (QCL), and/or thermal emitter, preferably incandescent lamp, Nernst lamp, resistance heating elements made of silicon carbide or carbon arc lamp.

8. The ATR infrared spectroscopy method according to any one of the preceding claims,
**characterised in that**
the light paths in step a) (101) and b) (102), in particular for the light (3r) reflected from the sample material (5) in the first and in the second polarisation state, are substantially identical.

9. The ATR infrared spectroscopy method according to any one of the preceding claims,
**characterised in that**
the steps a) (101) and b) (102) are carried out simultaneously, in particular **in that** the intensities of the light (3r) reflected from the sample material (5) in the first and in the second polarisation state are determined simultaneously.

10. An ATR infrared spectrometer, for determining optical properties of a liquid sample material (5) comprising:

- a reflection element (9), wherein the reflection element (9) is an ATR element, and a fixing unit (19) which is designed for fixing the sample material (5) in such a way that the sample material (5) is arranged directly on the reflection element (9);
- a light source which is designed for irradiating light from the infrared wavelength range onto the sample material (5) through the reflection element (9) in such a way that the light (3e) is totally reflected at the interface (13) formed by the sample material (5) and the reflection element (9);

**characterized by**

- at least one detector device (8, 8a, 8b) which is configured for determining a first intensity of light (3r) reflected from the sample material (5) in a first polarisation state and for determining a second intensity of the light (3r) reflected from the sample material (5) in a second polarisation state, wherein the first polarisation state is parallel polarised light and the second polarisation state is perpendicular polarised light;
- at least one computing unit (11), which is configured for forming the ratio between the first intensity and the second intensity, or vice versa.

11. The ATR infrared spectrometer according to claim 10,
**characterised in that**,
the ATR infrared spectrometer comprises a first detector device (8a) and a second detector device (8b), wherein the first detector device (8a) is configured for determining the first intensity of the light (3r) reflected from the sample material (5) in the first polarisation state and the second detector device (8b) is configured for determining the second intensity of the light (3r) reflected from the sample material (5) in the second polarisation state.

12. The ATR infrared spectrometer according to any one of claims 10 or 11,
**characterised in that**
the ATR infrared spectrometer further comprises at least one polariser (10, 10a, 10b), which is designed for splitting the light reflected from the sample material (5) into the first polarisation state and the second polarisation state, in particular **in that** the ATR infrared spectrometer comprises a first polariser (10a) and a second polariser (10b), wherein the first polariser (10a) is configured for splitting the light (3r) reflected from the sample material (5) into the first polarisation state and the second polariser (10b) is configured for splitting the light (3r) reflected from the sample material (5) into the second polarisation state.

**Revendications**

1. Procédé de spectroscopie infrarouge ATR pour déterminer les propriétés optiques d'un matériau d'échantillon liquide (5), comprenant l'étape suivante:

Irradiation (104) de lumière (3e) de la plage de longueurs d'onde infrarouge sur le matériau d'échantillon (5) à travers un élément de réflexion (9) de telle sorte que la lumière (3e) soit totalement réfléchie à l'interface (13) formée par le matériau d'échantillon (5) et l'élément de réflexion (9), l'élément de réflexion (9) étant un élément ATR; et **caractérisé par** les étapes supplémentaires:

a) Détermination (101) d'une première intensité de la lumière réfléchie (3r) à l'interface d'un premier état de polarisation;
b) Détermination (102) d'une deuxième intensité de la lumière réfléchie (3r) à l'interface d'un deuxième état de polarisation;
c) Formation du rapport (103) entre la première intensité et la deuxième intensité ou inversement;

dans laquelle le premier état de polarisation est une lumière polarisée parallèlement et le deuxième état de polarisation est une lumière polarisée perpendiculairement.

2. Procédé de spectroscopie infrarouge ATR selon la revendication 1,
**caractérisé en ce que**
le procédé comprend en outre l'étape suivante, en particulier qui est effectuée avant les étapes a) et b):

- Séparation (105) de la lumière réfléchie (3r) par le matériau d'échantillon (5) en premier état de polarisation et deuxième état de polarisation, de préférence au moyen d'au moins un polariseur (10, 10a, 10b), plus préférablement au moyen d'un premier polariseur (10a) et d'un deuxième polariseur (10b).

3. Procédé de spectroscopie infrarouge ATR selon la revendication 2,
**caractérisé en ce que**
l'au moins un polariseur (10, 10a, 10b), en particulier le premier polariseur (10a) et le deuxième polariseur (10b), est choisi dans le groupe: polariseur basé sur la biréfringence, de préférence prisme polarisant, plus préférablement prisme de Nicol, prisme de Rochon, prisme de Glan-Thomson, polariseur basé sur le dichroïsme, de préférence film J et/ou film H, et/ou polariseur basé sur la réflexion, de préférence fenêtre de Brewster.

4. Procédé de spectroscopie infrarouge ATR selon l'une des revendications précédentes,
**caractérisé en ce que**
l'élément de réflexion (9) est un cristal ATR.

5. Procédé de spectroscopie infrarouge ATR selon l'une des revendications précédentes,
**caractérisé en ce que**
la lumière (3e) irradiée sur le matériau d'échantillon (5) est une lumière non polarisée.

6. Procédé de spectroscopie infrarouge ATR selon l'une des revendications précédentes,
**caractérisé en ce que**
la lumière (3e) irradiée sur le matériau d'échantillon (5) est une lumière de la région infrarouge proche et/ou moyenne et/ou lointaine, de préférence une lumière de la plage de longueurs d'onde entre 0,8 $\mu$m et 1000 $\mu$m, plus préférablement une lumière de la plage de longueurs d'onde entre 2,5 $\mu$m et 25 $\mu$m, encore plus préférablement une lumière de la plage de longueurs d'onde entre 8 $\mu$m et 12 $\mu$m.

7. Procédé de spectroscopie infrarouge ATR selon l'une des revendications précédentes,
**caractérisé en ce que**
la lumière (3e) irradiée sur le matériau d'échantillon (5) est émise par une source de lumière (2), en particulier où la source de lumière (2) est choisie dans le groupe: laser, de préférence laser à semi-conducteur, plus préférablement laser à cascade quantique (QCL), et/ou émetteurs thermiques, de préférence lampe à incandescence, lampe de Nernst, éléments chauffants résistifs en carbure de silicium ou lampe à arc de carbone.

8. Procédé de spectroscopie infrarouge ATR selon l'une des revendications précédentes,
**caractérisé en ce que**
les trajets lumineux dans les étapes a) (101) et b) (102), en particulier pour la lumière réfléchie (3r) par le matériau d'échantillon (5) du premier et du deuxième état de polarisation, sont sensiblement identiques.

9. Procédé de spectroscopie infrarouge ATR selon l'une des revendications précédentes,
**caractérisé en ce que**
les étapes a) (101) et b) (102) se déroulent simultanément, en particulier que l'intensité de la lumière réfléchie (3r) par le matériau d'échantillon (5) du premier et du deuxième état de polarisation est déterminée simultanément.

**10.** Spectromètre infrarouge ATR pour déterminer les propriétés optiques d'un matériau d'échantillon liquide (5) comprenant:

- un élément de réflexion (9), l'élément de réflexion (9) étant un élément ATR, et une unité de fixation (19) qui est configurée pour fixer le matériau d'échantillon (5) de telle sorte que le matériau d'échantillon (5) soit disposé directement sur l'élément de réflexion (9);
- une source de lumière qui est configurée pour irradier de la lumière de la plage de longueurs d'onde infrarouge sur le matériau d'échantillon (5) à travers l'élément de réflexion (9) de telle sorte que la lumière (3e) soit totalement réfléchie à l'interface (13) formée par le matériau d'échantillon (5) et l'élément de réflexion (9);

**caractérisé par**

- au moins un dispositif de détection (8, 8a, 8b) qui est configuré pour déterminer une première intensité de la lumière réfléchie (3r) par le matériau d'échantillon (5) d'un premier état de polarisation et pour déterminer une deuxième intensité de la lumière réfléchie (3r) par le matériau d'échantillon (5) d'un deuxième état de polarisation, dans lequel le premier état de polarisation est une lumière polarisée parallèlement et le deuxième état de polarisation est une lumière polarisée perpendiculairement;
- au moins une unité de calcul (11) qui est configurée pour former le rapport entre la première intensité et la deuxième intensité ou inversement.

**11.** Spectromètre infrarouge ATR selon la revendication 10, **caractérisé en ce que**
le spectromètre infrarouge ATR comprend un premier dispositif de détection (8a) et un deuxième dispositif de détection (8b), le premier dispositif de détection (8a) étant configuré pour déterminer la première intensité de la lumière réfléchie (3r) par le matériau d'échantillon (5) du premier état de polarisation, et le deuxième dispositif de détection (8b) étant configuré pour déterminer la deuxième intensité de la lumière réfléchie (3r) par le matériau d'échantillon (5) du deuxième état de polarisation.

**12.** Spectromètre infrarouge ATR selon l'une des revendications 10 ou 11,
**caractérisé en ce que**
le spectromètre infrarouge ATR comprend en outre au moins un polariseur (10, 10a, 10b) qui est configuré pour séparer la lumière réfléchie par le matériau d'échantillon (5) en premier état de polarisation et deuxième état de polarisation, en particulier que le spectromètre infrarouge ATR comprend un premier polariseur (10a) et un deuxième polariseur, le premier polariseur (10a) étant configuré pour séparer la lumière réfléchie (3r) par le matériau d'échantillon (5) en premier état de polarisation et le deuxième polariseur (10b) étant configuré pour séparer la lumière réfléchie (3r) par le matériau d'échantillon (5) en deuxième état de polarisation.

Fig. 1

Fig. 2a

Fig. 2b

Fig. 3a

Fig. 3b

Fig. 4a

Fig. 4b

Fig. 4c

Fig. 5a

Fig. 5b

Fig. 5c

Fig. 6

100

104

105

101

102

103

106

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3902807 A
- US 7920264 B1
- EP 3399299 A1
- DE 10145719 A1
- WO 2002001203 A1